# EUROPEAN PATENT SPECIFICATION

(11) **EP 3 474 497 B1**
(45) Date of publication and mention of the grant of the patent: **16.11.2022**
(21) Application number: 17812601.7
(22) Date of filing: 06.06.2017
(51) Int. Cl.: H04L 12/46

(54) **AGGREGATING VIRTUAL LOCAL AREA NETWORKS**
AGGREGATION VON VIRTUELLEN LOKALEN NETZWERKEN
AGRÉGATION DES RÉSEAUX DE ZONE LOCAUX VIRTUELS

(30) Priority: 16.06.2016 CN 201610431096
(43) Date of publication of application: 24.04.2019
(73) Proprietor: ZTE Corporation, Shenzhen, Guangdong 518057 (CN)
(72) Inventor: LIN, Ning, Shenzhen Guangdong 518057 (CN)
(74) Representative: Herzog IP Patentanwalts GmbH
(86) International application number: PCT/CN2017/087321
(87) International publication number: WO 2017/215490

(56) References cited:
- CN-A- 1 852 240
- CN-A- 101 635 702
- CN-A- 105 262 685
- CN-A- 105 392 171
- US-A1- 2003 152 075
- US-A1- 2007 097 968
- US-A1- 2014 044 126
- US-B1- 7 953 089
- US-B1- 9 160 633

## Description

### TECHNICAL FIELD

The invention relates to communication technology, and particularly, to a method and a device for aggregating virtual local area networks (VLANs).

### BACKGROUND

With development of communication technology, for saving Internet protocol (IP) addresses, VLAN aggregation is proposed. The VLAN aggregation refers to aggregating one first VLAN (Super VLAN) and multiple second VLANs (Sub VLANs), ports in all the second VLANs sharing a VLAN interface IP address of the first VLAN as a default gateway. Herein, the second VLANs may be user-side networks and the first VLAN may be a network-side network.

The first VLAN acquires messages from different VLANs. After processing is completed, the first VLAN, when sending a message to each second VLAN, acquires parameter information carried in the message according to the message at first, then matches a parameter in the message and a relation table by using an access control list (ACL) and determines an output port corresponding to each message, thereby outputting the message to each of the second VLANs. The relation table includes a mapping correspondence between the parameters in the messages and the second VLANs.

However, in a process of implementing the above related art by the inventor of the invention, when matching the parameter in the message and the relation table, a shortage of the ACL resource results in a low message processing efficiency.

US 2007/097968 A1 discloses a bridge forwarding method for bridge forwarding of the Ethernet frames between multiple VLANs.

US9 160 633 B1 discloses a system for dynamically learning virtual local area network (VLAN) tags comprises a switching element having a VLAN table and a media access control (MAC) table.

### SUMMARY

The present invention is defined in the appended independent claims to which reference should be made. Advantageous features are set out in the appended dependent claims.

### BRIEF DESCRIPTION OF DRAWINGS

The drawings are used to provide a further understanding of the technical solutions of the invention, constitute a part of the specification and are used to explain, together with embodiments of the application, the technical solutions of the invention and are not intended to constitute limits to the technical solutions of the invention.
FIG. 1 is a schematic flowchart of a method for aggregating VLANs according to an embodiment of the invention;
FIG. 2 is a schematic diagram of an aggregation effect of a method for aggregating VLANs according to an embodiment of the invention;
FIG. 3 is a schematic diagram of an aggregation effect of a method for aggregating VLANs according to an embodiment of the invention; and
FIG. 4 is a schematic structural diagram of a device for aggregating VLANs according to an embodiment of the invention.

### DETAILED DESCRIPTION

In order to make the purposes, technical solutions and advantages of the invention clearer, the embodiments of the invention will be described in detail below with reference to the drawings. It is to be noted that, in the case of no conflict, the features in the embodiments and the embodiments in the present invention may be arbitrarily combined with each other.

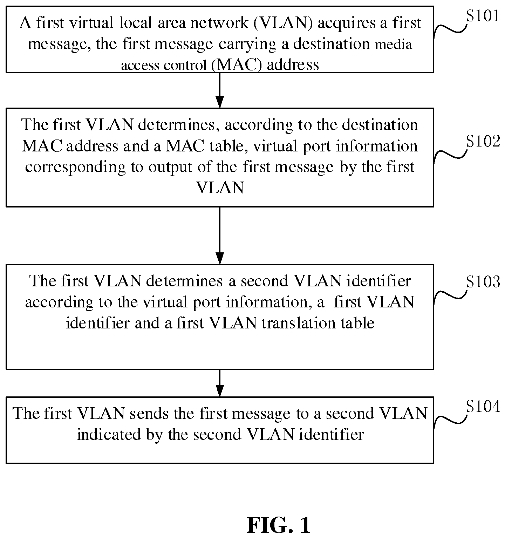

FIG. 1 is a schematic flowchart of a method for aggregating VLANs according to an embodiment of the invention. As illustrated in FIG. 1, the method for aggregating VLANs provided in the invention includes the following operations.

In 101, a first VLAN acquires a first message, the first message carrying a destination MAC address.

In 102, the first VLAN determines, according to the destination MAC address and a MAC table, virtual port information corresponding to output of the first message by the first VLAN.

In the embodiment, the MAC table includes at least correspondences between MAC address information, a first VLAN identifier and the virtual port information. The first VLAN identifier is used to identify the first VLAN. Herein, the MAC address information includes at least one of the destination MAC address.

It is to be noted that the MAC table may be obtained by MAC address learning. Instead of learning MAC address on an entity port, in the embodiment, the MAC address is learned on a virtual port. This process is implemented only at the level of a chip, and does not affect MAC address learning at the level of a protocol, namely, it is invisible to an upper layer.

In 103, the first VLAN determines a second VLAN identifier according to the virtual port information, the first VLAN identifier and a first VLAN translation table.

In the embodiment, the first VLAN translation table includes correspondences between the virtual port information, the first VLAN identifier and the second VLAN identifier. The first VLAN identifier is used to identify the first VLAN and the second VLAN identifier is used to identify the second VLAN.

It is to be noted that, when a VLAN translation function is set in a VLAN translation table on a chip by use of a virtual port resource of a second layer virtual private network (VPN), a mapping correspondence of the virtual port resource of the second layer VPN is added. That is, the first VLAN translation table is added, namely multiple second VLANs are directly mapped into different virtual ports and the first local area network.

In 104, the first VLAN sends the first message to the second VLAN indicated by the second VLAN identifier.

In the embodiment, the first VLAN acquires the first message, the first message carrying the destination MAC address. The first VLAN determines, according to the destination MAC address and the MAC table, the virtual port information corresponding to output of the first message by the first VLAN, the MAC table including at least a mapping correspondence between the destination MAC address, the first VLAN identifier and the virtual port information, and the first VLAN identifier being used to identify the first VLAN. The first VLAN determines the second VLAN identifier according to the virtual port information, the first VLAN identifier and the first VLAN translation table, the first VLAN translation table including the correspondences between the virtual port information, the first VLAN identifier and the second VLAN identifier, and the second VLAN identifier being used to identify the second VLAN. The first VLAN sends the first message to the second VLAN indicated by the second VLAN identifier. Accordingly, an entity port is determined according to the first VLAN translation table, and it is avoided to determine the entity port by using the ACL, thereby a message processing speed is increased.

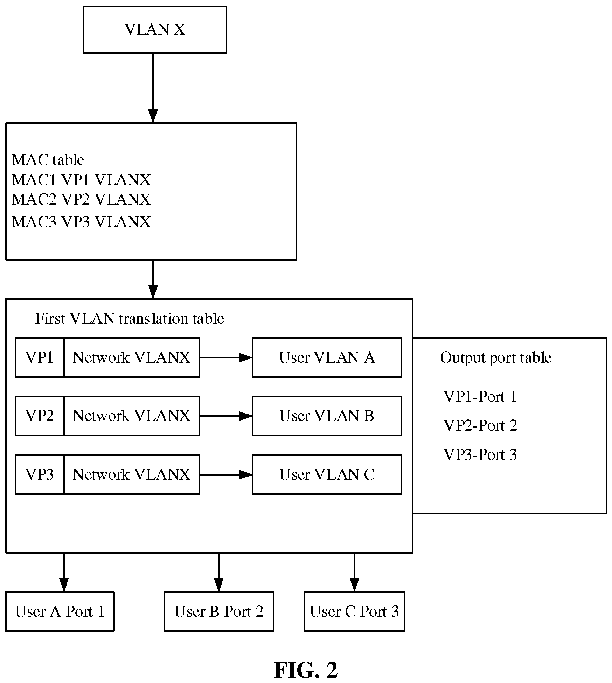

FIG. 2 is a schematic diagram of an aggregation effect of a method for aggregating VLANs according to an embodiment of the invention. As illustrated in FIG. 2, on the basis of the abovementioned embodiment, before the operation that the first VLAN sends the first message to the second VLAN, the method for aggregating VLANs provided in the invention further includes the following operations.

The first VLAN determines an entity port according to the second VLAN identifier and an output port table, the entity port including a port that is corresponding to the VLAN indicated by the second VLAN identifier, and the entity port being arranged in the first VLAN.

The operation that the first VLAN sends the first message to the second VLAN includes the following operation.

The first VLAN sends the first message to the second VLAN connected to the entity port.

For example, the first VLAN, i.e., a VLAN X, receives a first message, a MAC address 1 of the first message being 00:11:22:33:44:55. Then, the first VLAN searches the MAC table for the learned MAC address 1 being 00:11:22:33:44:55 according to a virtual private LAN service (VPLS) flow to obtain virtual port information VP1 corresponding to the first VLAN. Next, the first VLAN searches the first VLAN translation table to acquire the second VLAN, according to a network-side identifier VLAN 1001 carried in the first message and the VP1 acquired from the MAC table, that is, a user-side VLAN is 100. Then the VLAN in the first message is replaced with the user-side VLAN 100. It is determined that a physical port corresponding to the VP1 is a port 1 by searching the output port table, and the first message is forwarded to a user A of the first VLAN from the port 1. Herein, the user A, a user B and a user C may all be devices located in the same first VLAN or may be devices located in different first VLANs.

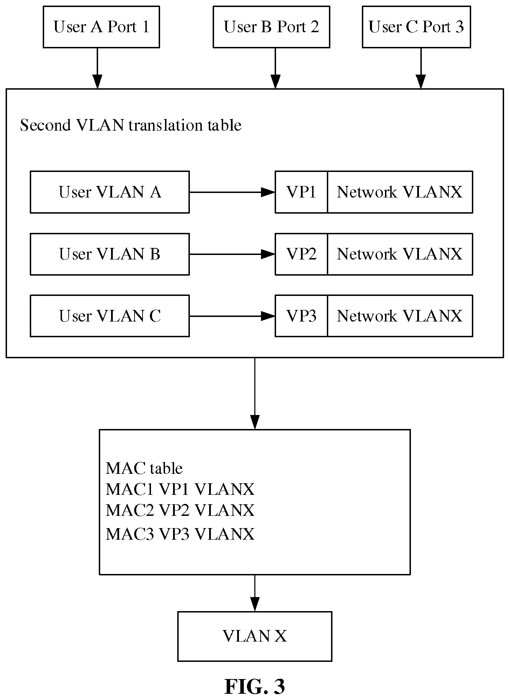

FIG. 3 is a schematic diagram of an aggregation effect of a method for aggregating VLANs according to of an embodiment the invention. As illustrated in FIG. 3, on the basis of the abovementioned embodiment, before the operation that the first VLAN acquires the first message, the method for aggregating VLANs provided in the invention further includes the following operations.

The first VLAN acquires a second message from a second VLAN, the second message carrying the second VLAN identifier;
the first VLAN determines the first VLAN identifier and the virtual port information according to the second VLAN identifier and a second VLAN translation table, the second VLAN translation table including the correspondences between the second VLAN identifier, the virtual port information and the first VLAN identifier; and
the first VLAN determines the MAC table according to the first VLAN identifier and the virtual port information, the MAC table including at least correspondences between a source MAC address, the first VLAN identifier and the virtual port information, and the source MAC address including a MAC address of the second VLAN.

For example, the source MAC address of the second message is 00:11:22:33:44:55. At first, a port 1 of the first VLAN receives the second message from the second VLAN of which the second VLAN identifier is VLAN 100. That is, the port 1 of the first VLAN receives the second message from a client A. Then, the first VLAN identifier VLAN 1001 and the virtual port information VP1 are determined according to the second VLAN identifier and the second VLAN translation table. Next, the MAC table is generated according to the first VLAN identifier, the virtual port information and the source MAC address. Then, the message is forwarded from a port of the VLAN 1001 according to a VLAN forwarding flow.

On the basis of the abovementioned embodiments, before the operation that the first VLAN acquires the first message, the method further includes at least one of the following operations.

The first VLAN acquires the first VLAN translation table; or
the first VLAN acquires the second VLAN translation table.

It is to be noted that, on the basis of the abovementioned embodiments, before the operation that the first VLAN acquires the first message, the method further includes the following operation.

The first VLAN acquires virtual port configuration information, the virtual port configuration information being used to configure, in the first VLAN, a virtual port for communicating with the second VLAN.

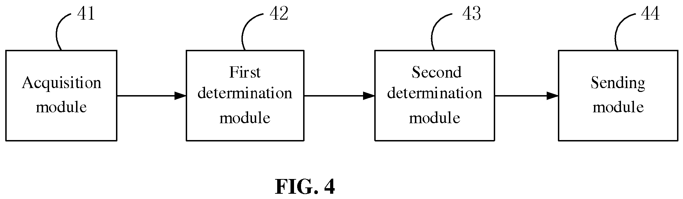

FIG. 4 is a schematic structural diagram of a device for aggregating VLANs according to an embodiment of the invention. As illustrated in FIG. 4, the device for aggregating VLANs in the embodiment includes an acquisition module 41, a first determination module 42, a second determination module 43 and a sending module 44.

Herein, the acquisition module 41 is arranged to acquire a first message, the first message carrying a destination MAC address.

The first determination module 42 is arranged to determine, according to the destination MAC address and a MAC table, virtual port information corresponding to output of the first message by a first VLAN. The MAC table includes at least correspondences between the destination MAC address, a first VLAN identifier and the virtual port information, and the first VLAN identifier is used to identify the first VLAN.

The second determination module 43 is arranged to determine a second VLAN identifier according to the virtual port information, the first VLAN identifier and a first VLAN translation table. The first VLAN translation table includes correspondences between the virtual port information, the first VLAN identifier and the second VLAN identifier, and the second VLAN identifier is used to identify the second VLAN.

The sending module 44 is arranged to send the first message to the second VLAN indicated by the second VLAN identifier.

In the embodiment, the first VLAN acquires the first message, the first message carrying the destination MAC address. The first VLAN determines, according to the destination MAC address and the MAC table, the virtual port information corresponding to output of the first message by the first VLAN, the MAC table including at least the correspondences between the destination MAC address, the first VLAN identifier and the virtual port information, and the first VLAN identifier being used to identify the first VLAN. The first VLAN determines the second VLAN identifier according to the virtual port information, the first VLAN identifier and the first VLAN translation table, the first VLAN translation table including the correspondences between the virtual port information, the first VLAN identifier and the second VLAN identifier, and the second VLAN identifier being used to identify the second VLAN. The first VLAN sends the first message to the second VLAN indicated by the second VLAN identifier. Accordingly, an entity port is determined according to the first VLAN translation table, and it is avoided to determinate the entity port by using an ACL, thereby a message processing speed is increased.

On the basis of the abovementioned embodiment, the acquisition module 41 is further arranged to acquire, by the first VLAN, a second message from the second VLAN, the second message carrying the second VLAN identifier.

The second determination module 43 is further arranged to determine the first VLAN identifier and the virtual port information according to the second VLAN identifier and a second VLAN translation table. The second VLAN translation table includes correspondences between the second VLAN identifier, the virtual port information and the first VLAN identifier.

The first determination module 42 is further arranged to determine the MAC table according to the first VLAN identifier and the virtual port information. The MAC table includes at least correspondences between a source MAC address, the first VLAN identifier and the virtual port information, and the source MAC address includes a MAC address of the second VLAN.

Optionally, on the basis of the abovementioned embodiment, the acquisition module 41 is further arranged to execute at least one of the following operations.

The first VLAN translation table is acquired; or
the second VLAN translation table is acquired.

Optionally, on the basis of the abovementioned embodiment, the acquisition module 41 may be further arranged to acquire virtual port configuration information, the virtual port configuration information being used to configure, in the first VLAN, a virtual port for communicating with the second VLAN.

Optionally, on the basis of the abovementioned embodiment, the second determination module 43 may be further arranged to determine an entity port according to the second VLAN identifier and an output port table. The entity port includes a port corresponding to the VLAN indicated by the second VLAN identifier, and the entity port is arranged in the first VLAN.

The sending module 44 is arranged to send the first message to the second VLAN connected to the entity port.

In the embodiment, an entity port is determined according to the first VLAN translation table, and it is avoided to determine the entity port by using an ACL, thereby a message processing speed is increased.

An embodiment of the invention further discloses a storage medium. Optionally, in the embodiment, the storage medium may be configured to store a program code configured to execute the following operations.

In S1, a first VLAN acquires a first message, the first message carrying a destination MAC address.

In S2, the first VLAN determines virtual port information corresponding to output of the first message by the first VLAN according to the destination MAC address and a MAC table. The MAC table includes at least correspondences between MAC address information, a first VLAN identifier and the virtual port information, and the first VLAN identifier is used to identify the first VLAN.

In S3, the first VLAN determines a second VLAN identifier according to the virtual port information, the first VLAN identifier and a first VLAN translation table. The first VLAN translation table includes correspondences between the virtual port information, the first VLAN identifier and the second VLAN identifier, and the second VLAN identifier is used to identify the second VLAN.

In S4, the first VLAN sends the first message to the second VLAN indicated by the second VLAN identifier.

Optionally, the storage medium may be further configured to store a program code configured to execute the following operations.

In S1, a first VLAN acquires a second message from a second VLAN, the second message carrying a second VLAN identifier and a source MAC address, and the source MAC address including a MAC address of the second VLAN.

In S2, the first VLAN determines a first VLAN identifier and virtual port information according to a second VLAN identifier and a second VLAN translation table, the second VLAN translation table including correspondences between the second VLAN identifier, the virtual port information and the first VLAN identifier.

In S3, the first VLAN generates a MAC table according to the first VLAN identifier, the virtual port information and the source MAC address.

Optionally, the storage medium may be further configured to store a program code configured to execute the following operations.

In S1, a first VLAN acquires a first VLAN translation table; and
in S2, the first VLAN acquires a second VLAN translation table.

Optionally, the storage medium may be further configured to store a program code configured to execute the following operation.

In S1, the first VLAN acquires virtual port configuration information, the virtual port configuration information being used to configure, in the first VLAN, a virtual port corresponding to an entity port for communicating with the second VLAN.

### INDUSTRIAL APPLICABILITY

In the technical solutions of the invention, the first message is acquired, the first message carrying the MAC address. The virtual port information corresponding to output of the first message by the first VLAN is determined according to the MAC address and the MAC table, the MAC table including at least the correspondences between the destination MAC address, the first VLAN identifier and the virtual port information. The second VLAN identifier is determined according to the virtual port information, the first VLAN identifier and the first VLAN translation table, the first VLAN translation table including the mapping correspondence about the correspondences between the virtual port information, the first VLAN identifier and the second VLAN identifier. The first message is sent to the second VLAN. Accordingly, an entity port is determined according to the first VLAN translation table, and it is avoided to determine the entity port by using an ACL, thereby a message processing speed is increased.

## Claims

1. A method performed by a device for aggregating virtual local area networks, VLANs, the method comprising:
acquiring (S101) a first message from a first VLAN, the first message carrying a destination media access control, MAC, address;
determining (SI02) according to the destination MAC address and a MAC table, virtual port information corresponding to output of the first message; the MAC table comprising correspondences between MAC address information, a first VLAN identifier and the virtual port information, and the first VLAN identifier being used to identify the first VLAN;
determining (S103) a second VLAN identifier according to the virtual port information, the first VLAN identifier and a first VLAN translation table; the first VLAN translation table comprising correspondences between the virtual port information, the first VLAN identifier and the second VLAN identifier, and the second VLAN identifier being used to identify a second VLAN; and
sending (S104) the first message to the second VLAN indicated by the second VLAN identifier, wherein before acquiring (S101) the first message,
acquiring a second message from the second VLAN, the second message carrying the second VLAN identifier and a source MAC address, and the source MAC address comprising a MAC address of the second VLAN;
determining the first VLAN identifier and the virtual port information according to the second VLAN identifier and a second VLAN translation table, the second VLAN translation table comprising correspondences between the second VLAN identifier, the virtual port information and the first VLAN identifier; and
generating the MAC table according to the first VLAN identifier, the virtual port information and the source MAC address,
wherein before sending the first message to the second VLAN,
determining an entity port according to the second VLAN identifier and an output port table, the entity port comprising a physical port that is corresponding to the virtual port and arranged in the first VLAN,
wherein sending the first message to the second VLAN comprises:
sending the first message to the second VLAN connected to the entity port.

2. The method of claim 1, further comprising at least one of the following operations:
before acquiring (S101) the first message,
acquiring the first VLAN translation table; or
acquiring the second VLAN translation table.

3. The method of claim 2, further comprising:
before acquiring (S101) the first message,
acquiring virtual port configuration information, the virtual port configuration information being used to configure, in the first VLAN, a virtual port corresponding to an entity port for communicating with the second VLAN.

4. A device for performing the method for aggregating virtual local area networks, VLANs, of claim 1, the device comprising:
an acquisition module (41), arranged to acquire a first message from a first VLAN, the first message carrying a destination media access control, MAC, address;
a first determination module (42), arranged to determine, according to the destination MAC address and a MAC table, virtual port information corresponding to output of the first message; the MAC table comprising correspondences between MAC address information, a first VLAN identifier and the virtual port information, and the first VLAN identifier being used to identify the first VLAN;
a second determination module (43), arranged to determine a second VLAN identifier according to the virtual port information, the first VLAN identifier and a first VLAN translation table;
the first VLAN translation table comprising correspondences between the virtual port information, the first VLAN identifier and the second VLAN identifier, and the second VLAN identifier being used to identify a second VLAN; and
a sending module (44), arranged to send the first message to the second VLAN indicated by the second VLAN identifier,
wherein the acquisition module (41) is further arranged to acquire, by the first VLAN, a second message from the second VLAN, the second message carrying the second VLAN identifier and a source MAC address, and the source MAC address comprising a MAC address of the second VLAN,
wherein the second determination module (43) is further arranged to determine the first VLAN identifier and the virtual port information according to the second VLAN identifier and a second VLAN translation table, the second VLAN translation table comprising correspondences between the second VLAN identifier, the virtual port information and the first VLAN identifier,
wherein the first determination module (42) is further arranged to generate the MAC table according to the first VLAN identifier, the virtual port information and the source MAC address,
wherein the second determination module (43) is further arranged to determine an entity port according to the second VLAN identifier and an output port table, the entity port comprising a physical port that is corresponding to the virtual port and arranged in the first VLAN, and
wherein the sending module (44) is arranged to send the first message to the second VLAN connected to the entity port.

5. The device of claim4, wherein the acquisition module (41) is further arranged to execute at least one of the following operations:
acquiring the first VLAN translation table; or
acquiring the second VLAN translation table.

6. The device of claim 5, wherein the acquisition module (41) is further arranged to acquire virtual port configuration information, the virtual port configuration information being used to configure, in the first VLAN, a virtual port corresponding to an entity port for communicating with the second VLAN.

7. A computer-readable storage medium comprising instructions which, when executed by a computer, cause the computer to carry out all the steps of the method according to any of claims 1 to 3.

## Patentansprüche

1. Verfahren, das von einer Vorrichtung zur Aggregation virtueller lokaler Netzwerke, VLANs, durchgeführt wird, wobei das Verfahren umfasst:
Erfassen (S101) einer ersten Nachricht von einem ersten VLAN, wobei die erste Nachricht eine Ziel-MAC-Adresse (Media Access Control) trägt;
Bestimmen (S102) von virtuellen Portinformationen, die der Ausgabe der ersten Nachricht entsprechen, gemäß der Ziel-MAC-Adresse und einer MAC-Tabelle; wobei die MAC-Tabelle Entsprechungen zwischen MAC-Adressinformationen, einer ersten VLAN-Kennung und den virtuellen Portinformationen umfasst und die erste VLAN-Kennung verwendet wird, um das erste VLAN zu identifizieren;
Bestimmen (S103) eines zweiten VLAN-Identifizierers gemäß der Information über den virtuellen Anschluss, dem ersten VLAN-Identifizierer und einer ersten VLAN-Übersetzungstabelle; wobei die erste VLAN-Übersetzungstabelle Entsprechungen zwischen der Information über den virtuellen Anschluss, dem ersten VLAN-Identifizierer und dem zweiten VLAN-Identifizierer umfasst und der zweite VLAN-Identifizierer verwendet wird, um ein zweites VLAN zu identifizieren; und
Senden (S104) der ersten Nachricht an das zweite VLAN, das durch die zweite VLAN-Kennung angegeben wird,
wobei vor dem Erfassen (S101) der ersten Nachricht,
Erfassen einer zweiten Nachricht aus dem zweiten VLAN, wobei die zweite Nachricht den zweiten VLAN-Identifikator und eine Quell-MAC-Adresse trägt und die Quell-MAC-Adresse eine MAC-Adresse des zweiten VLAN umfasst;
Bestimmen des ersten VLAN-Identifikators und der Informationen über den virtuellen Anschluss gemäß dem zweiten VLAN-Identifikator und einer zweiten VLAN-Übersetzungstabelle, wobei die zweite VLAN-Übersetzungstabelle Entsprechungen zwischen dem zweiten VLAN-Identifikator, den Informationen über den virtuellen Anschluss und dem ersten VLAN-Identifikator umfasst; und
Generierung der MAC-Tabelle entsprechend der ersten VLAN-Kennung, der virtuellen Port-Information und der MAC-Quelladresse,
wobei vor dem Senden der ersten Nachricht an das zweite VLAN,
Bestimmen eines Entity-Ports gemäß der zweiten VLAN-Kennung und einer Ausgangs-Port-Tabelle, wobei der Entity-Port einen physischen Port umfasst, der dem virtuellen Port entspricht und im ersten VLAN angeordnet ist,
wobei das Senden der ersten Nachricht an das zweite VLAN umfasst:
Senden der ersten Nachricht an das zweite VLAN, das mit dem Entity-Port verbunden ist.

2. Verfahren nach Anspruch 1, das außerdem mindestens einen der folgenden Schritte umfasst:
vor der Erfassung (S101) der ersten Meldung,
Erfassen der ersten VLAN-Übersetzungstabelle; oder
Erfassen der zweiten VLAN-Übersetzungstabelle.

3. Das Verfahren nach Anspruch 2 umfasst ferner:
vor der Erfassung (S101) der ersten Nachricht,
Erfassen von Informationen zur Konfiguration des virtuellen Ports, wobei die Informationen zur Konfiguration des virtuellen Ports verwendet werden, um in dem ersten VLAN einen virtuellen Port zu konfigurieren, der einem Entity-Port für die Kommunikation mit dem zweiten VLAN entspricht.

4. Vorrichtung zur Durchführung des Verfahrens zur Aggregation virtueller lokaler Netzwerke, VLANs, nach Anspruch 1, wobei die Vorrichtung Folgendes umfasst:
ein Erfassungsmodul (41), das so angeordnet ist, dass es eine erste Nachricht von einem ersten VLAN erfasst, wobei die erste Nachricht eine Ziel-MAC-Adresse (Media Access Control) trägt;
ein erstes Bestimmungsmodul (42), das so beschaffen ist, dass es gemäß der Ziel-MAC-Adresse und einer MAC-Tabelle virtuelle Anschlussinformationen bestimmt, die der Ausgabe der ersten Nachricht entsprechen; wobei die MAC-Tabelle Entsprechungen zwischen MAC-Adressinformationen, einer ersten VLAN-Kennung und den virtuellen Anschlussinformationen umfasst und die erste VLAN-Kennung verwendet wird, um das erste VLAN zu identifizieren;
ein zweites Bestimmungsmodul (43), das so eingerichtet ist, dass es eine zweite VLAN-Kennung gemäß den Informationen über den virtuellen Anschluss, die erste VLAN-Kennung und eine erste VLAN-Übersetzungstabelle bestimmt;
die erste VLAN-Übersetzungstabelle Entsprechungen zwischen der Information über den virtuellen Anschluss, dem ersten VLAN-Bezeichner und dem zweiten VLAN-Bezeichner umfasst, und der zweite VLAN-Bezeichner verwendet wird, um ein zweites VLAN zu identifizieren; und
ein Sendemodul (44), das so beschaffen ist, dass es die erste Nachricht an das zweite VLAN sendet, das durch die zweite VLAN-Kennung angegeben wird,
wobei das Erfassungsmodul (41) ferner so angeordnet ist, dass es durch das erste VLAN eine zweite Nachricht von dem zweiten VLAN erfasst, wobei die zweite Nachricht den zweiten VLAN-Identifikator und eine Quellen-MAC-Adresse trägt und die Quellen-MAC-Adresse eine MAC-Adresse des zweiten VLAN umfasst,
wobei das zweite Bestimmungsmodul (43) ferner so eingerichtet ist, dass es die erste VLAN-Kennung und die virtuellen Portinformationen gemäß der zweiten VLAN-Kennung und einer zweiten VLAN-Übersetzungstabelle bestimmt, wobei die zweite VLAN-Übersetzungstabelle Entsprechungen zwischen der zweiten VLAN-Kennung, den virtuellen Portinformationen und der ersten VLAN-Kennung umfasst,
wobei das erste Bestimmungsmodul (42) ferner so eingerichtet ist, dass es die MAC-Tabelle gemäß dem ersten VLAN-Identifikator, der virtuellen Port-Information und der MAC-Quelladresse erzeugt,
wobei das zweite Bestimmungsmodul (43) ferner eingerichtet ist, einen Entity-Port gemäß dem zweiten VLAN-Identifikator und einer Ausgangs-Port-Tabelle zu bestimmen, wobei der Entity-Port einen physikalischen Port umfasst, der dem virtuellen Port entspricht und in dem ersten VLAN angeordnet ist, und
wobei das Sendemodul (44) so angeordnet ist, dass es die erste Nachricht an das zweite VLAN sendet, das mit dem Entity-Port verbunden ist.

5. Vorrichtung nach Anspruch 4, wobei das Erfassungsmodul (41) ferner eingerichtet ist, um mindestens eine der folgenden Operationen auszuführen:
Erfassen der ersten VLAN-Übersetzungstabelle; oder
Erfassen der zweiten VLAN-Übersetzungstabelle.

6. Vorrichtung nach Anspruch 5, wobei das Erfassungsmodul (41) ferner so angeordnet ist, dass es virtuelle Portkonfigurationsinformationen erfasst, wobei die virtuellen Portkonfigurationsinformationen verwendet werden, um in dem ersten VLAN einen virtuellen Port zu konfigurieren, der einem Entity-Port zur Kommunikation mit dem zweiten VLAN entspricht.

7. Computerlesbares Speichermedium, das Anweisungen enthält, die, wenn sie von einem Computer ausgeführt werden, den Computer veranlassen, alle Schritte des Verfahrens nach einem der Ansprüche 1 bis 3 auszuführen.

## Revendications

1. Procédé exécuté par un dispositif pour agréger des réseaux locaux virtuels, VLAN, le procédé comprenant
l'acquisition (S101) d'un premier message provenant d'un premier VLAN, le premier message portant une adresse de contrôle d'accès au support, MAC, de destination ;
déterminer (S102) selon l'adresse MAC de destination et une table MAC, des informations de port virtuel correspondant à la sortie du premier message ; la table MAC comprenant des correspondances entre les informations d'adresse MAC, un premier identificateur de VLAN et les informations de port virtuel, et le premier identificateur de VLAN étant utilisé pour identifier le premier VLAN ;
déterminer (S103) un second identificateur de VLAN selon les informations de port virtuel, le premier identificateur de VLAN et une première table de traduction de VLAN ; la première table de traduction de VLAN comprenant des correspondances entre les informations de port virtuel, le premier identificateur de VLAN et le second identificateur de VLAN, et le second identificateur de VLAN étant utilisé pour identifier un second VLAN ; et
envoyer (S104) le premier message au deuxième VLAN indiqué par le deuxième identifiant de VLAN,
dans lequel, avant l'acquisition (S101) du premier message,
l'acquisition d'un second message à partir du second VLAN, le second message portant le second identifiant de VLAN et une adresse MAC source, et l'adresse MAC source comprenant une adresse MAC du second VLAN ;
déterminer le premier identificateur de VLAN et les informations de port virtuel selon le second identificateur de VLAN et une seconde table de traduction de VLAN, la seconde table de traduction de VLAN comprenant des correspondances entre le second identificateur de VLAN, les informations de port virtuel et le premier identificateur de VLAN ; et
générer la table MAC selon le premier identificateur de VLAN, les informations de port virtuel et l'adresse MAC source,
dans lequel avant d'envoyer le premier message au second VLAN,
déterminer un port d'entité selon le second identificateur de VLAN et une table de ports de sortie, le port d'entité comprenant un port physique qui correspond au port virtuel et qui est disposé dans le premier VLAN,
dans lequel l'envoi du premier message au second VLAN comprend :
envoyer le premier message au deuxième VLAN connecté au port de l'entité.

2. Procédé de la revendication 1, comprenant en outre au moins une des opérations suivantes :
avant d'acquérir (S101) le premier message,
acquérir la première table de traduction VLAN ; ou
acquérir la deuxième table de traduction VLAN.

3. Procédé de la revendication 2, comprenant en outre :
avant d'acquérir (S101) le premier message,
acquérir des informations de configuration de port virtuel, les informations de configuration de port virtuel étant utilisées pour configurer, dans le premier VLAN, un port virtuel correspondant à un port d'entité pour communiquer avec le second VLAN.

4. Dispositif pour exécuter le procédé d'agrégation de réseaux locaux virtuels, VLAN, de la revendication 1, le dispositif comprenant :
un module d'acquisition (41), agencé pour acquérir un premier message à partir d'un premier VLAN, le premier message portant une adresse de contrôle d'accès au support, MAC, de destination ;
un premier module de détermination (42), agencé pour déterminer, selon l'adresse MAC de destination et une table MAC, des informations de port virtuel correspondant à la sortie du premier message ; la table MAC comprenant des correspondances entre des informations d'adresse MAC, un premier identifiant de VLAN et les informations de port virtuel, et le premier identifiant de VLAN étant utilisé pour identifier le premier VLAN ;
un second module de détermination (43), agencé pour déterminer un second identifiant de VLAN selon les informations de port virtuel, le premier identifiant de VLAN et une première table de traduction de VLAN;
la première table de traduction de VLAN comprenant des correspondances entre les informations de port virtuel, le premier identifiant de VLAN et le second identifiant de VLAN, et le second identifiant de VLAN étant utilisé pour identifier un second VLAN ; et
un module d'envoi (44), agencé pour envoyer le premier message au deuxième VLAN indiqué par le deuxième identifiant de VLAN,
dans lequel le module d'acquisition (41) est en outre agencé pour acquérir, par le premier VLAN, un second message provenant du second VLAN, le second message portant le second identifiant de VLAN et une adresse MAC source, et l'adresse MAC source comprenant une adresse MAC du second VLAN,
dans lequel le second module de détermination (43) est en outre agencé pour déterminer le premier identificateur de VLAN et les informations de port virtuel selon le second identificateur de VLAN et une seconde table de traduction de VLAN, la seconde table de traduction de VLAN comprenant des correspondances entre le second identificateur de VLAN, les informations de port virtuel et le premier identificateur de VLAN,
dans lequel le premier module de détermination (42) est en outre agencé pour générer la table MAC selon le premier identifiant de VLAN, les informations de port virtuel et l'adresse MAC source,
dans lequel le second module de détermination (43) est en outre agencé pour déterminer un port d'entité selon le second identificateur de VLAN et une table de ports de sortie, le port d'entité comprenant un port physique qui correspond au port virtuel et qui est agencé dans le premier VLAN, et
dans lequel le module d'envoi (44) est agencé pour envoyer le premier message au second VLAN connecté au port de l'entité.

5. Dispositif de la revendication 4, dans lequel le module d'acquisition (41) est en outre agencé pour exécuter au moins une des opérations suivantes :
acquérir la première table de traduction VLAN ; ou
acquérir la deuxième table de traduction VLAN.

6. Dispositif selon la revendication 5, dans lequel le module d'acquisition (41) est en outre agencé pour acquérir des informations de configuration de port virtuel, les informations de configuration de port virtuel étant utilisées pour configurer, dans le premier VLAN, un port virtuel correspondant à un port d'entité pour communiquer avec le second VLAN.

7. Support de stockage lisible par ordinateur comprenant des instructions qui, lorsqu'elles sont exécutées par un ordinateur, amènent l'ordinateur à réaliser toutes les étapes du procédé selon l'une quelconque des revendications 1 à 3.
